# EUROPEAN PATENT APPLICATION

(11) **EP 1 983 222 A2**
(43) Date of publication of application: **22.10.2008**
(21) Application number: 07116801.7
(22) Date of filing: 20.09.2007
(51) Int. Cl.: F16H 55/06, F16H 55/12, F16H 55/48, F16H 55/30, F16H 55/46

(54) **Sprocket assembly particularly for conveyor belts or chains**

(30) Priority: 20.04.2007 IT TV20070017 U
(71) Applicant: Plastomeccanica S.p.A., 31029 Vittorio Veneto TV (IT)
(72) Inventor: Fandella, Sergio, 31021 Mogliano Veneto TV (IT)
(74) Representative: Modiano, Micaela Nadia

(57) **Abstract**

A modular sprocket assembly (1), particularly for conveyor belts or chains, comprising a sprocket (2) constituted by two sprocket halves (3a, 3b) between which there is an opening (9) inside which a hub (18) divided into two hub halves (20a, 20b) can be accommodated. The opening (9) has a polygonal cross-section which is shaped complementarily with respect to the hub (18) and means (19) are provided for the interconnection of the sprocket halves (3a, 3b) and for locking the hub (18) and can be accessed laterally with respect to the sprocket assembly. The sprocket halves (3a, 3b) are made of thermoplastic polyurethane or polyester and the hub halves (20a, 20b) are made of a mixture of polyamide and glass.

## Description

The present invention relates to a modular sprocket assembly, particularly for conveyor belts or chains.

Currently, sprockets provided with a substantially cylindrical hub which can be keyed to a shaft are used particularly for driving conveyor belts or chains.

In particular, US-5,702,316 is known which discloses a modular sprocket assembly which can be keyed to a shaft and comprises a sprocket obtained by joining two substantially semicircular sprocket halves, between which there is, once they have been mutually associated, a substantially cylindrical opening in which it is possible to arrange a hub, which can be divided into two semicylindrical hub halves and can be keyed to the shaft.

First through holes are formed radially in the sprocket halves starting from some of the grooves formed between the pairs of consecutive teeth and are faced by second threaded holes provided radially in the outer lateral surface of the hub.

The two sprocket halves can be coupled to each other and to the hub, thus constituting the sprocket, by inserting in their first holes means for removable fixing, such as for example screws, which can be screwed into the second holes formed within the hub.

The two semicylindrical hub halves, which are substantially mutually mirror-symmetrical, are kept joined during use by the two sprocket halves that enclose them.

The use of these known types of modular sprocket assembly allows to use a same hub in association with sprockets having a different outside diameter and vice versa to use a same sprocket in association with a plurality of hubs which have the same outside diameter and can be keyed to shafts of different diameters; this allows to reduce the production and storage costs of such sprocket assemblies.

It is further possible to assemble a hub and a sprocket made of two different materials, thus achieving a chosen combination of the different mechanical characteristics of the two materials.

The main drawback of these known types of sprocket assembly consists of the particular substantially cylindrical shape of the hub, which has to be coupled to the sprocket halves by means of the screws or pins associated with the first and second holes.

To obtain the first and second holes it is necessary to perform machining after the molding of the sprocket halves and hub halves, thus increasing the production costs of the modular sprocket assemblies.

Another drawback of known types of sprocket assembly relates to the fact that the first and second holes formed radially within the sprocket and in the hub halves require high precision for their provision and constitute weak points which facilitate the formation of cracks or fractures, which over time can lead to the breakage of the sprocket halves or of the hub halves.

Another important drawback is that the first holes formed in the grooves formed between the teeth of the sprocket constitute receptacles for dust or residues of the conveyed product; further, any loosening of the screws can cause vibration, and if the head of said screws affects the curved radiusing surface between two consecutive teeth it can cause jammings between said surface and the conveyor belt or chain with which it is associated and thus cause discontinuities in the motion of said belt or chain.

EPA 05111058.3 in the name of this same Applicant discloses a modular sprocket assembly particularly for conveyor belts or chains which comprises a sprocket constituted by two sprocket halves, between which there is an opening inside which a hub divided into two hub halves can be accommodated; the opening has a polygonal cross-section which is shaped complementarily with respect to the hub.

Such modular sprocket assembly provides means for the interconnection of the sprocket halves and for the locking of the hub which can be accessed laterally with respect to the sprocket assembly.

However, this known solution has the drawback that the driving of the conveyor belt or chain on the sprocket assembly is noisy.

The aim of the present invention is to solve the above mentioned problems, eliminating the drawbacks of the cited background art, by providing a sprocket assembly and a hub which can be assembled and keyed to a shaft easily and rapidly, at the same time reducing production and assembly costs and further ensuring good driving of a conveyor belt or chain with reduced driving noise.

Within this aim, an object of the invention is to provide a sprocket assembly which allows to achieve optimum, quick and safe interconnection between the sprocket and the hub.

Another object is to provide a sprocket assembly whose components are simple, safe and quick to assemble even by personnel which is not particularly trained.

Another object is to provide a sprocket assembly which, once assembled and installed, is free from jamming problems with respect to a conveyor belt or chain associated therewith.

Another object of the invention is to provide a modular sprocket assembly in which the locking of the hub with respect to the sprocket can be achieved simply and rapidly.

Another object is to provide a modular sprocket assembly which does not need to undergo, for its production, mechanical treatments which can weaken its structure, consequently reducing its life.

Another object is to provide a modular sprocket assembly which is structurally simple and can be provided with ordinary systems and machines and has low manufacturing costs.

This aim and these objects, as well as others which will become better apparent hereinafter, are achieved by a modular sprocket assembly, particularly for conveyor belts or chains, which comprises a sprocket constituted by two sprocket halves between which there is an opening inside which a hub divided into two hub halves can be accommodated, said opening having a polygonal cross-section which is shaped complementarily with respect to said hub, means being provided for the interconnection of said sprocket halves and for the locking of said hub which can be accessed laterally with respect to said sprocket assembly, characterized in that said sprocket halves are made of thermoplastic polyurethane or polyester and said hub halves are made of a mixture of polyamide and glass.

Further characteristics and advantages of the invention will become better apparent from the following detailed description of a particular but not exclusive embodiment thereof, illustrated by way of non-limiting example in the accompanying drawings, wherein:

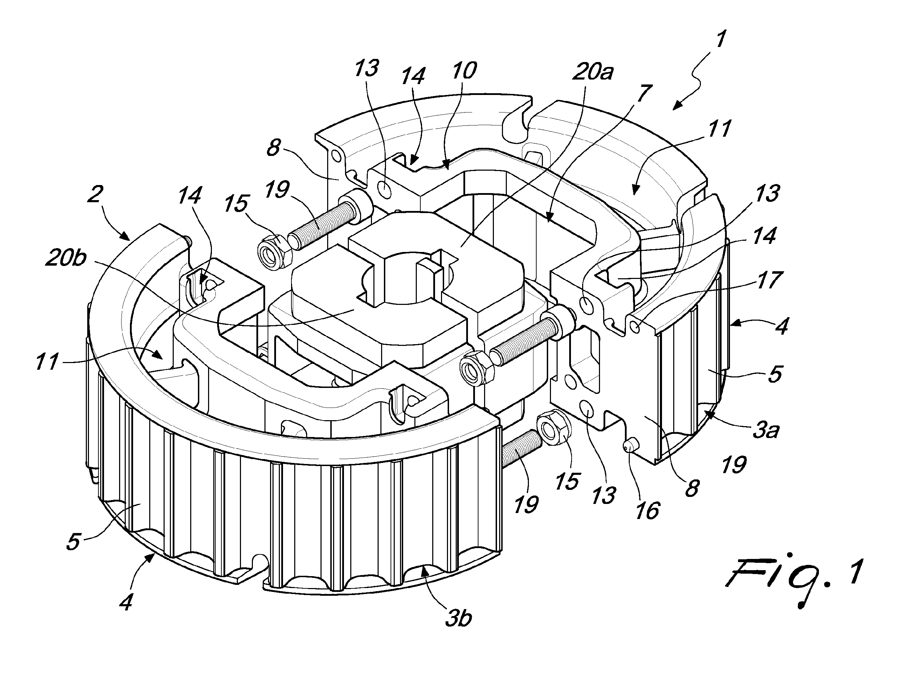

Figure 1 is an exploded perspective view of a sprocket assembly according to the invention;

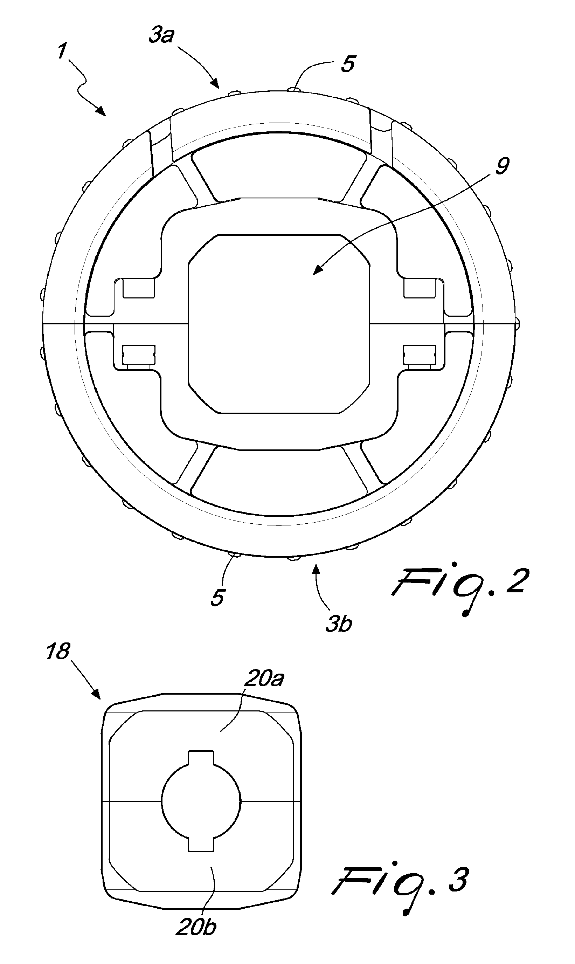

Figure 2 is a side view of the sprocket assembly in the assembled condition;
Figure 3 is a side view of the hub in the assembled condition.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates a sprocket assembly particularly for conveyor belts or chains.

The sprocket assembly 1 comprises a sprocket 2 which is constituted by two mutually mirror-symmetrical sprocket halves, which are designated respectively by the reference numerals 3a and 3b and are substantially semicircular, and from the curved outer surface 4 of which there protrudes radially a series of teeth 5, which can engage for example a conveyor belt or chain, not shown in the accompanying figures.

The sprocket halves 3a and 3b are made of thermoplastic polyurethane, for example the polyurethane produced by the company NOVEON under the trademark ESTANE, or are made of polyester.

Each of the sprocket halves 3a and 3b has, at the internal surface 6, a polygonal central seat 7 to which two substantially flat end faces 8 are contiguous, said end faces facing each other during use.

Once the two sprocket halves 3a and 3b have been arranged mutually adjacent at the end faces 8, the central seats 7 form an opening 9.

A recess 11 which surrounds the central seats 7 is provided on each of the two lateral faces 10 of each of the sprocket halves 3a and 3b.

At right angles to each of the end faces 8 there is a first pair of holes 13, which are connected at the region which is adjacent to the recesses 11, with a receptacle 14 for nuts 15.

Each sprocket half 3a and 3b comprises means for mutual centering, which are constituted advantageously by two or more pairs of pins 16 and by two or more pairs of complementarily shaped second holes 17 which respectively protrude and are formed at the end faces 8.

Each pin of a sprocket half faces, during use, one of the second holes 17 formed in the other sprocket half.

The sprocket assembly 1 further comprises means for detachable interconnection of the two sprocket halves 3a and 3b and for locking a hub 18, which are constituted advantageously by four pins 19, which can be interposed between the end faces 8 and have free ends which are threaded complementarily with respect to the nuts 15.

The hub 18 can be accommodated at the opening 9 of the sprocket 2 and is divided into two hub halves, designated respectively by the reference numerals 20a and 20b, which are shaped complementarily with respect to the central seats 7. The opening 9 has a polygonal cross-section and is shaped complementarily with respect to the hub 18.

The hub halves 20a and 20b are advantageously shaped approximately like an inverted letter C.

The hub halves 20a and 20b are made of a mixture composed of polyamide (for example the polyamide manufactured by the Du Pont company under the trademark ZYTEL) and glass, preferably in the form of fibers or microspheres; advantageously, the percentage of glass in the mixture is comprised between approximately 20% and approximately 40%.

The hub halves 20a and 20b that constitute the hub 18 have, on their mutually facing surfaces, a radial slot 21 for keying a shaft, not shown in the accompanying figures, for example by interposing at least one key 22.

Operation is therefore as follows: with reference to the figures, the two hub halves 20a and 20b that constitute the hub 18 are arranged mutually adjacent and then placed within the central seat 7 formed by arranging the two sprocket halves 3a and 3b mutually adjacent, after arranging one end of the pins 19 at one of them.

As an alternative, each hub half is inserted within the corresponding sprocket half and interlocks therein by way of the opposite tolerances between the corresponding surfaces of the hub half and of the corresponding central seat 7; two sprocket halves are thus formed which are then mutually interconnected by interposing and tightening the nuts 15.

Laterally with respect to the resulting sprocket assembly, and therefore without acting on the outer surface 4 thereof, the sprocket halves are thus mutually interconnected, locking the hub 18, by fastening the remaining nuts 15.

The hub 18 is therefore rotationally coupled to the sprocket 2 by way of the shape interference with respect to the central seat 7.

Use of thermoplastic polyurethane or of polyester for the two sprocket halves 3a and 3b which constitute the sprocket 2 and of the mixture of polyamide and glass for the two hub halves 20a and 20b which constitute the hub 18 ensures good driving of the conveyor belt or chain moved by the sprocket assembly 1, at the same time reducing driving noise.

It has thus been found that the invention has achieved the intended aim and objects, a modular sprocket assembly particularly for chains or conveyor belts having been devised in which the mutual locking of the hub and of the sprocket occurs by way of an interference which does not require the provision of radial holes with respect to the sprocket.

Further, by way of the particular materials of which the two sprocket halves and the two hub halves are made, good driving of the conveyor belt or chain moved by the sprocket assembly is ensured while maintaining low driving noise.

The connection between the sprocket and the hub occurs easily and quickly and can be performed by acting on the means provided laterally with respect to the sprocket and not radially thereto.

The simplicity, safety and swiftness of the provision of the interconnection can also be provided even by personnel which is not particularly trained.

Finally, the absence of means for radial connection to the sprocket allows to obtain a sprocket assembly which does not have problems in terms of jamming with a conveyor belt or chain associated therewith and is free from machining work which can weaken its structure so as to extend its life.

The invention is of course susceptible of numerous modifications and variations, all of which are within the scope of the appended claims.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

The disclosures in Italian Utility Model Application No. TV2007U000017 which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A modular sprocket assembly (1), particularly for conveyor belts or chains, comprising a sprocket (2) constituted by two sprocket halves (3a, 3b) between which there is an opening (9) inside which a hub (18) divided into two hub halves (20a, 20b) can be accommodated, said opening (9) having a polygonal cross-section which is shaped complementarily with respect to said hub (18), means (19) being provided for the interconnection of said sprocket halves and for the locking of said hub (18) which can be accessed laterally with respect to said sprocket assembly, **characterized in that** said sprocket halves (3a, 3b) are made of thermoplastic polyurethane or polyester and said hub halves (20a, 20b) are made of a mixture of polyamide and glass.

2. The sprocket assembly according to claim 1, **characterized in that** said glass is provided in said mixture in the form of fibers.

3. The sprocket assembly according to claim 1, **characterized in that** said glass is present in said mixture in the form of microspheres.

4. The sprocket assembly according to one or more of the preceding claims, **characterized in that** said glass is present in said mixture in a percentage comprised between approximately 20% and approximately 40%.
